# EUROPEAN PATENT SPECIFICATION

(11) **EP 0 411 598 B1**
(45) Date of publication and mention of the grant of the patent: **15.03.1995**
(21) Application number: 90114739.7
(22) Date of filing: 01.08.1990
(51) Int. Cl.: B27N 1/02, B27N 5/00

(54) **Process for obtaining polyurethane compounds containing granules of cork or similar substances, particularly for the manufacture of soles for footwear, apparatus for realising this process, and the product so obtained**
Verfahren zur Herstellung von Korkgranulat oder ähnliche Substanzen enthaltenden Polyurethanverbindungen, insbesondere zur Herstellung von Schuhsohlen, Apparat zur Durchführung des Verfahrens und derart hergestelltes Produkt
Procédé pour fabriquer des composés de polyuréthane contenant des granulés de liège ou des substances similaires, notamment pour fabriquer des semelles de chaussures, appareil pour réaliser le procédé et produit fabriqué de cette façon

(30) Priority: 02.08.1989 IT 2141489
(43) Date of publication of application: 06.02.1991
(73) Proprietor: Losio, Gianfranco, I-27029 Vigevano PV (IT)
(72) Inventor: Losio, Gianfranco, I-27029 Vigevano PV (IT)
(74) Representative: Lecce, Giovanni

(56) References cited:
- EP-A- 0 273 301
- WO-A-89/04125
- DE-A- 1 685 718
- DE-A- 3 621 343
- DE-C- 1 227 767
- US-A- 3 607 124
- WORLD PATENTS INDEX LATEST Derwent Publications Ltd., London, GB; AN 83-825581 & SU-A-991 994 (LEATHER SHOE IND.) 5 February 1983

## Description

The present invention relates to a process for producing polyurethane compounds embodying granules of cork or similar materials, to an apparatus for realising this process and to the product so obtained.

Particularly, the present invention relates to a process for producing polyurethane compounds embodying granules of cork or similar materials particularly suitable for the manufacture of soles for footwear.

EP-A-O 273 301 discloses a process for manufacturing panels with decorated surfaces and utilizable for the furniture industry in order to obtain doors, wings, frams and similar elements. Each panel is formed by molding operation of a covering layer constituted by a mixture of conventional wood pulp and foamed polyurethanes, optionally mixed with saw dust, wood dust or other similar waste materials, which is preventively introduced into an internal cavity of a movable mold and coated by a superficial coating layer formed by at least a thin sheet made of natural wood, onto at least an underlying support plate made of chipboard, plywood, conglomerate materials and similar materials with small specific gravity.

Cork granules are widely used in production processes of in composite materials used, for example, as acoustic insulators; and in such cases the cork is mixed with cement, while in other composite materials it may be mixed with bitumen or resins, leading to the production of panels or sheets for covering walls. The same granules are also widely used for making stoppers for bottles, according to a process which involves compression and the addition of binders With reference to the footwear industry, cork granules are used for making soles for light shoes, by processes which lead to the production of a conglomerate of cork and rubber, or rubber latex, or similar materials.

These components, suitably mixed together, are put into moulds and then compressed and heated until the rubber vulcanises, thus incorporating and binding together the cork granules. This known process however requires the compound to be raised to a high temperature, which sometimes reaches and exceeeds 150°C. Various problems are created by this heating, connected mainly with the fact that the soles, especially in their thinner parts, tend to darken; and also, still because of the high temperature, the layer of leather which traditionally covers the sole on the side which supports the foot and which is inseparably attached to it during the forming process, tends to stretch and then to become shiny and to blacken in an irregular way, thus partly losing its functional characteristics and creating unpleasant aesthetic effects.

The object of the present invention is to avoid the above mentioned inconveniences.

Particularly, the object of the present invention is to provide a process for producing polyurethane compounds incorporating cork or similar granules in variable but predeterminable concentrations, so that said composite materials will be suitable for use particularly in the manufacture of soles for footwear. In its broadest aspect, the present invention is characterised by the fact that it uses, in association with the aforesaid granules, polyurethane compounds which do not require high reaction temperature, in place of the traditional products like rubber, micro-foamed rubber and latex.

According to the present invention the above and other objects are achieved by the features in the characterizing part of claim 1.

Moreover, the known problems of agglomeration connected with the use of polyurethane, and connected with the reaction times of the resins and the isocyanates, have been solved by use of an apparatus having the features set out in the characterizing part of claim 2.

The advantages deriving from use of the present invention refer firstly to the fact that the reaction times are appreciably reduced, as compared with those needed for the vulcanisation of rubber; as well as the temperature which, according to the process subject matter of the invention, is comprised between 25°C and 50°C. The saving of energy and the saving correlated with the very short operation times are therefore obvious. Furthermore the product which is obtained has an aesthetic value due to the regular distribution of the grains of cork, which can have a very high concentration, and do not show any alterations due to scorching or blackening due to the temperature. The product is also more flexible, lighter, and tougher compared with the products obtained by the traditional methods described earlier on.

These, as well as other specific characteristics of the present invention, will be better understood in the course of the description which follows, which makes reference to the attached drawings in which:

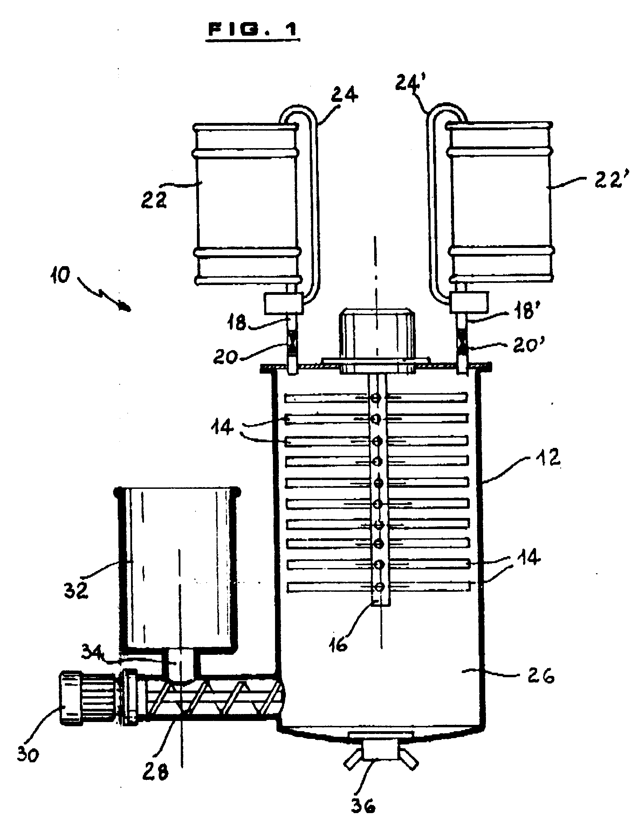

- Fig. 1.: shows a schematic side view, partly in section, of the mixing vessel to which the various components are added;
- Fig. 2.: shows a longitudinal section of one of the various shaping moulds with a mobile forming die;
- Fig.3.: shows the same mould, in side view and partly in section, during the phase of actually forming a product.
Reference to the above figures will enable the various phases of the productive process to be clearly distinguished as well as the structure of the device which is used for it.

The process consists fundamentally of the following steps:
A. Introduction into the upper part of the mixing vessel of the basic constituents of polyurethane, namely resins and isocyanates;
B. Contemporaneous introduction into the mixing chamber, during Phase A, of cork granules by means of a screw conveyor whose speed can be programmed. The granules are mixed into the polyurethane compound during the reaction phase by means of the multibladed agitator;
C. Transfer of the composite mixture into a forming mould;
D. Closure of the mould, which is already at the desired temperature;
E. Opening of the mould and extraction of the manuafctured articles.

The equipment conceived and made for carrying out the process is composed, as can be seen from the attached drawings, of a mixing unit, the whole being indicated as 10, itself composed of a cylindrical vessel 12 within which runs an agitator with many blades 14 on a rotating shaft 16.

Above it are situated feeding pipes 18-18', with valves 20-20' whose opening and closing is programmed for the admission of the basic components of the polyurethane, namely resins (polymerised polyols) and isocyanates, coming from two tanks 22-22' and continually recirculated through return pipes 24-24'. The mixing vessel 12 is prolonged towards the bottom so as to create, below the agitator, a chamber 26 intended to collect in the first place the polyurethane compound in process of polymerising due to the centrifuging to which it has been submitted, and secondly the granules of cork or similar delivered to the same part 26 of the vessel 12 by the screw or spiral conveyor 28, which is driven by motor 30. The hopper 32 is suitable for holding these same granules, which are drawn in through the opening 34 and pushed into 26 by the above mentioned screw conveyor 28. The conveyor, depending on the speed of the motor 30, its own dimensions and shape at the throat, transfers a pre-established quantity of granules which thus get mixed into the just formed or still reacting polyurethane compound which is in any case not yet solidified. The compound embodying the mixed-in cork granules then passes through orifice 36 in the bottom end of the vessel 12, by gravity or under pressure (produced by screws or injectors) into the cavities 38 of the various shaping moulds, conveniently installed on a multistation rotating transfer machine.

The shaping moulds, indicated by 40 as a whole, are designed so that the capacity of the cavity 38 can be increased so as to accept a considerable quantity of the composite material.

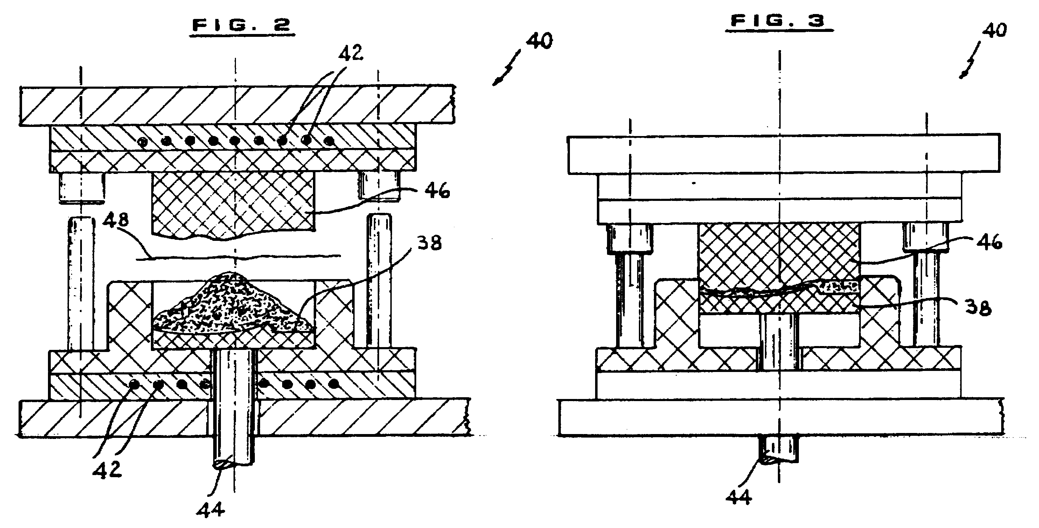

As can be seen in Fig.2., at the moment that the polyurethane/cork compound composite is introduced, through orifice 36 in vessel 12, the die at the bottom of the cavity 38 descends, creating a larger chamber for the compound.

Immediately afterwards however the same die, actuated by the same device that had lowered it just before (for example, a pneumatic cylinder 44) raises itself, simultaneously or immediately after the descent of piston 46, as can be seen in Fig.3. During this phase there is also introduced, by hand or automatically, the strip of leather 48 which covers and adheres to the upper side of the sole which is being produced. Electrical resistances 42 heat the mould, and hence also the compound while it solidifies. Solidification takes very little time, of the order of 2 - 6 minutes, while the temperature does not go above 50 - 55°C, thus eliminating all risk of scorching or blackening, either localized or general, either of the sole and/or of the leather lining 48. The products obtained through the process and with the apparatus described do not show any appearance defects such as hollows due to absence or poor distribution of the cork granules, since there is also the possibility of inserting large quantities of the granules while the die is lowered. Soles obtained in this way show notable characteristics of resistance and flexibility, while the strips of leather which face them are intact and not stretched.

The present invention as described above could be modified or varied in many ways, all,however,without escaping from its scope.

Thus, for example the process could use granules other than of cork in association with polyurethane, not only for the manufacture of soles for footwear, but also to obtain other products, for example thermal insulation or sound-absorbing panels. The introduction of the granules into the mixing vessel might be done by means of more than one screw conveyor, or alternatively, by compressed air.

## Claims

1. A process for producing polyurethane compounds embodying granules of cork or similar substances, particularly suitable for the manufacture of soles for footwear, which process consists in preparing the polyurethane by mixing its components in a mixing vessel (12), mixing the polyurethane with the granules of cork or similar substances, feeding the polyurethane-cork granule mixture to a cavity (38) of a movable shaping mold (40), and molding the mixture by heating and compression, characterized in that the mixing is carried out into a lower portion (26) of the mixing vessel (12) whereto the still-reacting polyurethane components are collected and the granules of cork or similar substances are delivered by means of a screw conveyor (28) and the molding is carried out for a time ranging from 2 to 6 minutes and at a temperature comprised between 25 and 50°C.

2. A device for performing the process according to claim 1, comprising a mixing vessel (12) provided with a rotating agitator, feed pipes (18) (18') for the resins and the isocyanates, and inlet valves (20)(20') and outlet valve(s) (36), and a movable shaping mold (40) provided with a cavity (38), characterised in that the said mixing vessel (12) is prolonged at the bottom below the stirrer so as to create a chamber (26) into which the granules of cork or similar substance are fed by means of a helical conveyor (28) driven by a motor (30), the said granules being there incorporated into the reacting polyurethane, the composite material thus obtained being subsequently fed, through the orifice (36), into the cavity dies (38) of the movable shaping mould (40) heated at a temperature comprised between 25 and 50°C.

3. The device according to claim 2, characterised in that at least the lower die (38) of the mould (40) is moveable, and can be lowered to accept a larger quantity of the composite material being delivered from the mixing vessel (12) through the orifice (36).

4. The device according to anyone of the preceding claims, characterised in that the speed of the screw conveyor (28) can be regulated to deliver a programmed quantity of granules, contained in a hopper (32), to the lower portion (26) of the mixing vessel (12).

5. The device according to anyone of the preceding claims, characterised in that it is provided with two or more screw conveyors, or with compressed air tubes, for feeding the granules into the lower portion (26) of the mixing vessel (12).

## Patentansprüche

1. Verfahren zum Erzeugen von Polyurethan-Zusammensetzungen, die Korkkörnchen oder ähnliche Substanzen enthalten und die insbesondere geeignet für die Herstellung von Sohlen für Fußbekleidung sind, wobei das Verfahren darin besteht das Polyurethan durch Mischen seiner Komponenten in einem Mischbehälter (12) zu erzeugen, das Polyurethan mit den Korkkörnchen oder ähnlichen Substanzen zu mischen, das Polyurethan-Korkkörnchen-Gemisch einer Aushöhlung (38) einer beweglichen formgebenden Form (40) zuzuführen und die Mischung durch Erhitzen und Kompression zu formen,
**dadurch gekennzeichnet**, daß
das Mischen in einem unteren Abschnitt (26) des Mischbehälters (12) ausgeführt wird, wozu die noch reagierenden Polyurethankomponenten gesammelt und die Korkkörnchen oder ähnliche Substanzen durch einen Schraubenförderer (28) geliefert werden, und das Formen während einer Zeit im Bereich von 2 bis 6 Minuten und bei einer Temperatur, die zwischen 25 und 50°C liegt, ausgeführt wird.

2. Vorrichtung zum Durchführen des Verfahrens gemäß Anspruch 1, die einen Mischbehälter (12), der mit einem rotierenden Rührwerk versehen ist, Zuführröhren (18, 18') für die Harze und Isozyanate und Einlaßventile (20, 20') und Auslaßventil(e) (36), und eine bewegliche formgebende Form (40), die mit einer Aushöhlung (38) versehen ist, aufweist, dadurch gekennzeichnet, daß der Mischbehälter (12) an dem unteren Teil unter dem Rührer verlängert ist, um so eine Kammer (26) zu schaffen, in die die Korkkörnchen oder ähnliche Substanzen mit Hilfe eines helix-förmigen Förderers (28), der durch einen Motor (30) angetrieben ist, eingespeist werden, wobei die Körnchen dort in das reagierende Polyurethan eingefügt werden, wobei das so erhaltene zusammengesetzte Material darauffolgend durch die Öffnung (36) in die Hohlformteile (38) der beweglichen formgebenden Form (40) eingespeist werden, die auf eine Temperatur erhitzt wird, die zwischen 25 und 50°C liegt.

3. Vorrichtung gemäß Anspruch 2, dadurch gekennzeichnet, daß zumindest das untere Formteil (38) der Form (40) beweglich ist und abgesenkt werden kann, um eine größere Menge des zusammengesetzten Materials aufzunehmen, das von dem Mischbehälter (12) durch die Öffnung (36) geliefert wird.

4. Vorrichtung gemäß einem der vorhergehenden Ansprüche, dadurch gekennzeichnet, daß die Geschwindigkeit des Schraubenförderers (28) reguliert werden kann, um eine programmierte Menge von Körnchen, die in einem Bunker (32) enthalten sind, zu dem unteren Abschnitt (26) des Mischbehälters (12) zu liefern.

5. Vorrichtung gemäß einem der vorhergehenden Ansprüche, dadurch gekennzeichnet, daß sie mit zwei oder mehr Schraubenförderern oder mit Röhren für komprimierte Luft zum Einspeisen der Körnchen in den unteren Abschnitt (26) des Mischbehälters (12) versehen ist.

## Revendications

1. Procédé de préparation de mélanges de polyuréthane renfermant des granules de liège ou des substances similaires, particulièrement approprié à la fabrication de semelles de chaussures, ce procédé comportant les étapes consistant à préparer le polyuréthane par mélange de ses composants dans un récipient de mélange (12), à mélanger le polyuréthane avec les granules de liège ou de substances similaires, à disposer le mélange de granules de liège et de polyuréthane dans une cavité (38) d'un moule de forme mobile (40), à mouler le mélange par chauffage et compression, caractérisé en ce que le mélange est réalisé dans la partie inférieure (26) d'un récipient de mélange (12) où les composants du polyuréthane en cours de réaction sont reçus et les granules de liège, ou de substances similaires, sont fournis au moyen d'un convoyeur à vis (28), le moulage étant mis en oeuvre pendant un temps de deux à six minutes à une température comprise entre 25°C et 50°C.

2. Dispositif de mise en oeuvre du procédé suivant la revendication 1 comprenant un récipient de mélange (12) comportant un agitateur rotatif, des canalisations d'alimentation (18,18') des résines et des isocyanates, des vannes d'entrée (20,20'), une vanne, ou des vannes, de sortie (36), et un moule de forme mobile (40) comportant une cavité (38), caractérisé en ce que le récipient de mélange (12) se prolonge vers son fond, sous l'agitateur, de façon à créer une chambre (26) dans laquelle les granules de liège, ou de substances similaires, sont amenés au moyen d'un convoyeur hélicoïdal (28) entrâiné par un moteur (30), lesdits granules y étant incorporés au polyuréthane en cours de réaction, le matériau composite ainsi obtenu étant délivré, au travers de la vanne de sortie (36), dans la cavité (38) du moule de forme mobile (40) et chauffé à une température comprise entre 25°C et 50°C.

3. Dispositif suivant la revendication 2 caractérisé en ce qu'au moins une partie inférieure (38) du moule (40) est mobile et peut être abaissée pour accepter une plus grande quantité de matériau composite délivré par le récipient de mélange (12) au travers de la vanne de sortie (36).

4. Dispositif suivant l'une quelconque des revendications précédentes caractérisé en ce que la vitesse du convoyeur à vis (28) peut être réglée de façon à fournir une quantité programmée de granules, contenus dans le réservoir (32), à la partie inférieure (26) du récipient de mélange (12).

5. Dispositif suivant l'une quelconque des revendications précédentes caractérisé en ce qu'il comporte au moins deux convoyeurs à vis, ou des tubes à air comprimé, pour fournir les granules à la partie inférieure (26) du récipient de mélange (12).
